# FASCICULE DE BREVET EUROPEEN

(11) **EP 3 827 207 B1**
(45) Date de publication et mention de la délivrance du brevet: **08.06.2022**
(21) Numéro de dépôt: 19758424.6
(22) Date de dépôt: 03.07.2019
(51) Int. Cl.: F24S 25/632, F24S 25/30

(54) **DISPOTIF DE FIXATION POUR PANNEAU, EN PARTICULIER POUR PANNEAU SOLAIRE**
VORRICHTUNG ZUR BEFESTIGUNG VON PANEELEN, INSBESONDERE VON SOLARPANEELEN
ATTACHMENT DEVICE FOR A PANEL, IN PARTICULAR FOR A SOLAR PANEL

(30) Priorité: 25.07.2018 FR 1856893
(43) Date de publication de la demande: 02.06.2021
(73) Titulaire: A. Raymond et Cie, 38000 Grenoble (FR)
(72) Inventeur: CHEVRIER, Jean-Baptiste, 38660 SAINT VINCENT DE MERCUZE (FR); LEGALL, Antoine, 38600 FONTAINE (FR); TURLOT, Emmanuel, 38000 GRENOBLE (FR); ROUZEVAL, Isabelle, 26000 VALENCE (FR)
(74) Mandataire: IP Trust
(86) Numéro de dépôt international: PCT/FR2019/051646
(87) Numéro de publication internationale: WO 2020/021178

(56) Documents cités:
- EP-A1- 3 303 941
- WO-A1-2018/024951
- CN-A- 106 788 189
- JP-A- 2006 100 639
- US-A1- 2005 081 981
- US-A1- 2012 097 207
- US-B2- 8 615 939

## Description

### DOMAINE DE L'INVENTION

La présente invention concerne le domaine des panneaux de grandes dimensions et des dispositifs de fixation associés. Elle concerne en particulier les dispositifs de fixation de modules solaires, en particulier des modules solaires bifaces sans cadre.

### ARRIERE PLAN TECHNOLOGIQUE DE L'INVENTION

Actuellement, plus de 90% des modules photovoltaïques (PV) comprennent un cadre métallique en aluminium permettant de rigidifier les modules fabriqués à partir d'un assemblage d'une plaque de verre en face avant (exposée au soleil) et d'une feuille de matière plastique (Tedlar) en face arrière. Cette configuration permet au module de résister aux fortes sollicitations, exercées par exemple par la neige ou le vent. Un autre avantage d'un tel cadre métallique est de faciliter la fixation mécanique du module PV sur une structure porteuse (métallique ou toiture).

La rigidité mécanique apportée par le cadre permet à cette construction de passer les tests de certification exigés par les normes en vigueur, qui comportent notamment un test sous charge pondérale correspondant à une hauteur de neige de plusieurs mètres. Sous une telle charge, la paroi de verre d'un module cadré de 1 × 1,6 m² fléchit au centre de plusieurs dizaines de millimètres.

Si cette structure de module cadré a largement été adoptée, elle présente néanmoins des inconvénients. En particulier, un surcoût de plus de 10% est imposé par la présence du cadre métallique.

Or, l'industrie PV concentre ses efforts de développements à réduire le coût de la production d'électricité tout en améliorant la fiabilité de ses installations.

Les fabricants de modules PV se sont ainsi intéressés, à la construction de modules bi-verres et/ou bifaces sans cadre pour :
- réduire le coût de fabrication du module en supprimant le cadre ; les modules à base d'un assemblage d'une plaque de verre en face avant et d'une plaque de verre en face arrière sont les plus adaptés à une configuration sans cadre du fait de leur rigidité ;
- augmenter la puissance électrique du module sans augmenter sa surface grâce à l'emploi de cellules bifaces.

On trouve dans l'art antérieur différents types de fixations latérales pour modules photovoltaïques sans cadre, notamment des fixations utilisant un ensemble de brides vissées, ou de brides élastiques, avec interposition d'un matériau plastique entre la bride et le module. Par exemple, le document US2013/0000689 divulgue un appareil adapté au support et à la fixation de module sans cadre. Il met en œuvre des éléments de fixation en U comportant une partie métallique et une partie en élastomère en contact avec le module. Le document US8522490 propose quant à lui un élément de fixation permettant un degré de liberté en rotation au module, notamment lors du fléchissement de celui-ci ; cela accroit la résistance du module aux efforts résultant d'une forte charge pondérale, en évitant la concentration de contraintes présentes au niveau des bords des fixations rigides.

Un inconvénient des fixations de l'état de la technique est la difficulté de mise en œuvre des solutions sur le terrain, lors de l'assemblage des panneaux sans cadre sur la structure porteuse, et la précision requise entre le positionnement des éléments de fixation sur le panneau et les éléments de fixation en vis-à-vis sur les rails de la structure porteuse. Un autre inconvénient reste la dégradation que peuvent subir les parties en élastomère des éléments de fixation, notamment compte tenu des conditions climatiques sévères auxquelles sont exposés les modules et compte tenu des sollicitations mécaniques subies lors du fléchissement des modules.

Le document CN 106 788 189 A divulgue un dispositif de fixation pour solidariser un panneau sur un rail de structure porteuse, comprenant une mâchoire supérieure et une mâchoire inférieure mobile.

### OBJET DE L'INVENTION

Un objet de l'invention est de proposer un dispositif de fixation remédiant à tout ou partie des inconvénients de l'art antérieur. Un objet de l'invention est notamment un dispositif de fixation d'un panneau solaire sans cadre, fiable, simple de fabrication et de mise en œuvre et compatible avec des panneaux bifaces.

### BREVE DESCRIPTION DE L'INVENTION

L'invention concerne un dispositif de fixation pour solidariser un panneau sur un rail de structure porteuse, comprenant :
- Une bride métallique de section en forme de C définissant une mâchoire supérieure, un fond et une paroi inférieure, et comprenant une mâchoire inférieure mobile, disposée entre la mâchoire supérieure et la paroi inférieure ; les mâchoires étant destinées à enserrer un bord du panneau ;
- Au moins un tampon en mousse plastique solidaire d'une face interne de chacune des mâchoires, et comportant une surface libre collable sur le bord du panneau lorsque les mâchoires enserrent ledit bord ;
- Une agrafe métallique comprenant au moins une languette de fixation flexible destinée à entrer en contact avec la paroi inférieure lorsque l'agrafe est insérée dans un espace d'emboitement défini par la mâchoire inférieure, le fond et la paroi inférieure de la bride, et à assurer le maintien de l'agrafe dans ledit espace d'emboitement.

Selon des caractéristiques avantageuses de l'invention, prises seules ou en combinaison :
- le tampon est une mousse alvéolaire à cellules fermées, à base de polyéthylène, de polyuréthane ou d'acrylique ;
- la mousse présente une résistance à la compression comprise entre 100 et 500 kPa, pour un taux de compression de 50% ;
- un tampon est solidaire de la face interne de chacune des mâchoires, via un film adhésif acrylique ;
- la surface libre collable du tampon comporte un film adhésif acrylique ;
- chaque tampon présente une épaisseur comprise entre 1mm et 3mm ;
- la mâchoire inférieure de la bride est mobile par rapport à la mâchoire supérieure, en translation selon un axe longitudinal, orthogonal à la section en forme de C de la bride ;
- la mâchoire inférieure de la bride est mobile par rapport à la mâchoire supérieure, en translation selon un axe normal à un plan dans lequel s'étend la mâchoire supérieure ;
- la mâchoire inférieure de la bride est mobile par rapport à la mâchoire supérieure, en rotation selon l'axe longitudinal ;
- la longueur de la bride, selon un axe longitudinal, orthogonal à la section en forme de C de la bride, est comprise entre 5 cm et 20 cm ;
- la paroi inférieure de la bride se prolonge en une paroi secondaire, orthogonale à la paroi inférieure, et apte à prendre appui sur un flan du rail, lorsque la bride est disposée sur un rebord dudit rail pour la fixation du panneau ;
- la bride est formée à partir d'un matériau choisi parmi l'acier ou l'aluminium
- l'agrafe est formée en l'acier ;
- la languette de fixation de l'agrafe est formée par découpe dans une paroi de l'agrafe et par pliage ;
- la languette de fixation coopère avec un épaulement de la paroi inférieure pour assurer le maintien de l'agrafe dans l'espace d'emboitement ;
- la languette de fixation assure le maintien de l'agrafe dans l'espace d'emboitement par griffure de la paroi inférieure, la dureté du matériau constituant l'agrafe étant supérieure à celle du matériau constituant la paroi inférieure de la bride ;
- l'élasticité de la languette de fixation favorise un enserrement du bord du panneau par les mâchoires.

L'invention concerne également un assemblage d'un panneau sur un rail de structure porteuse au moyen d'au moins un dispositif de fixation tel que ci-dessus, dans lequel :
- Les mâchoires supérieure et inférieure de la bride enserrent le bord du panneau, et sont respectivement fixées sur l'une et l'autre des faces du panneau par l'intermédiaire des tampons ;
- La mâchoire inférieure de la bride est disposée sur un rebord du rail et l'espace d'emboitement de la bride est positionné en vis-à-vis d'une ouverture ménagée dans un flan du rail ;
- L'agrafe est disposée dans l'ouverture et dans l'espace d'emboitement, de manière à maintenir le rebord du rail plaqué contre la mâchoire inférieure.

Selon des caractéristiques avantageuses de l'invention, prises seules ou en combinaison :
- le panneau constitue un module photovoltaïque comportant une pluralité de cellules photovoltaïques ;
- le module photovoltaïque est un module photovoltaïque bi-verre sans cadre et/ou biface sans cadre.

L'invention concerne enfin un procédé d'assemblage d'un panneau sur un rail de structure porteuse au moyen d'au moins un dispositif de fixation tel que ci-dessus, comprenant les étapes suivantes :
a) L'écartement de la mâchoire inférieure mobile de la bride par rapport à la mâchoire supérieure,
b) La fixation par collage de la mâchoire supérieure sur une face du panneau, puis de la mâchoire inférieure sur l'autre face par rapprochement de ladite mâchoire mobile,
c) La pose du panneau sur la structure porteuse, la mâchoire inférieure de la bride étant en appui sur un rebord du rail de ladite structure et l'espace d'emboitement de la bride étant en vis-à-vis avec une ouverture aménagée dans un flan du rail,
d) L'insertion de l'agrafe successivement dans ladite ouverture et dans l'espace d'emboitement, de manière à maintenir le rebord du rail plaqué contre la mâchoire inférieure, la languette de fixation de l'agrafe assurant le maintien de ladite agrafe dans l'espace d'emboitement.

Selon des caractéristiques avantageuses de l'invention, prises seules ou en combinaison :
- l'étape b) comprend le retrait de rubans protégeant les surfaces libres collables des tampons de la mâchoire supérieure et de la mâchoire inférieure, préalablement à la fixation sur les faces du panneau ;
- l'étape c) comprend la disposition de la bride dans une rainure de section en U du rail et sur le rebord du rail, et le glissement de la bride le long du rail, jusqu'à sa position pour fixation.

### BREVE DESCRIPTION DES DESSINS

D'autres caractéristiques et avantages de l'invention ressortiront de la description détaillée de l'invention qui va suivre en référence aux figures annexées sur lesquelles :
- la figure 1 présente une vue en coupe d'un dispositif de fixation conforme à l'invention ;
- les figures 2a et 2b présentent des vues en perspective d'une bride et de tampons d'un dispositif de fixation conforme à l'invention ;
- les figures 3a et 3b présentent de vues en perspective d'une agrafe d'un dispositif de fixation conforme à l'invention ;
- les figures 4a et 4b présentent une vue en coupe et une vue en perspective de l'assemblage d'un bord de panneau sur un rail de structure porteuse avec un dispositif de fixation conforme à l'invention.

### DESCRIPTION DETAILLEE DE L'INVENTION

L'invention concerne un dispositif de fixation 100 pour solidariser un panneau 10 sur un rail 20 de structure porteuse. Une application intéressante est la fixation de panneaux solaires ou modules photovoltaïques comportant une pluralité de cellules photovoltaïques. La présente invention est particulièrement avantageuse pour des modules photovoltaïques bi-verre sans cadre et/ou biface sans cadre.

Le dispositif de fixation 100 comprend une bride 30 métallique présentant une section en forme de C, dans le plan transversal (y,z). La bride 30 pourra par exemple être formée à partir d'un matériau choisi parmi l'acier ou l'aluminium.

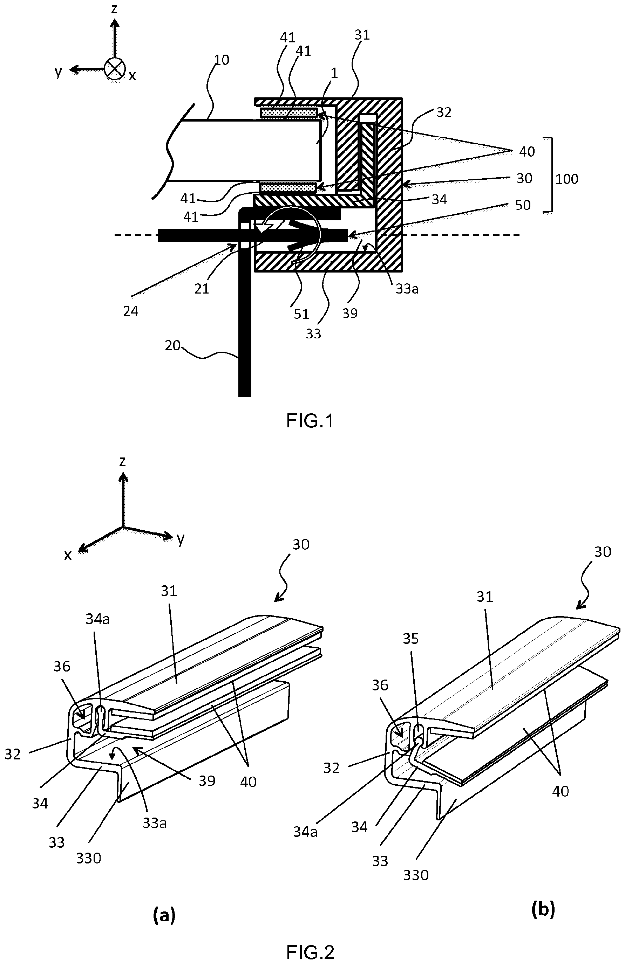

Comme schématisé sur la figure 1, la forme en C définit une mâchoire supérieure 31, un fond 32 et une paroi inférieure 33. La bride 30 présente une longueur selon un axe longitudinal (parallèle à l'axe x), orthogonal à la section en forme de C de la bride (comme visible sur la figure 2a) ; la longueur de la bride 30 est avantageusement comprise entre 5cm et 20cm, par exemple 15cm pour des panneaux 10 de 2m².

La bride 30 comprend également une mâchoire inférieure 34 mobile, disposée entre la mâchoire supérieure 31 et la paroi inférieure 33. Les mâchoires, supérieure 31 et inférieure 34, sont destinées à enserrer un bord 1 du panneau 10.

Selon une première variante, pour permettre aux deux mâchoires 31,34 de se rapprocher pour enserrer ledit bord 1, une liaison glissière peut les relier, autorisant une translation, selon l'axe z (axe normal à un plan dans lequel s'étend la mâchoire supérieure 31), de la mâchoire inférieure 34 vis-à-vis de la mâchoire supérieure 31.

Selon une deuxième variante, une liaison pivot peut relier les deux mâchoires 31,34, autorisant une rotation selon un axe longitudinal, parallèle à l'axe x, de la mâchoire inférieure 34 vis-à-vis de la mâchoire supérieure 31. Optionnellement, la liaison entre les deux mâchoires 31, 34 pourra être une combinaison des première et deuxième variantes précitées.

Selon une troisième variante, pouvant se combiner à l'une et/ou l'autre des variantes précédentes, la mâchoire inférieure 34 de la bride 30 pourra être mobile par rapport à la mâchoire supérieure 31 en translation selon l'axe longitudinal.

Les figures 2a et 2b présentent un exemple de liaison entre les mâchoires supérieure 31 et inférieure 34 autorisant les trois mouvements énoncés dans les variantes précitées. La mâchoire inférieure 34 présente une forme en L, une extrémité 34a étant destinée à réaliser la liaison sur la bride 30. La mâchoire inférieure 34 peut être montée sur la bride 30 par insertion de ladite extrémité 34a dans le logement 35 en bord de bride 30, et par translation, selon l'axe longitudinal, dans ledit logement 35, jusqu'à être en vis-à-vis avec la mâchoire supérieure 31. La mâchoire inférieure 34 est ensuite mobile en translation selon l'axe z et en rotation autour de l'axe longitudinal (axe x), du fait des formes respectives de l'extrémité 34a et du logement 35.

Bien sur, les figures 2a et 2b ne présentent qu'un exemple de réalisation de la liaison entre les deux mâchoires 31,34, plusieurs autres configurations pourraient être mises en œuvre, autorisant un ou plusieurs des mouvements relatifs précédemment énoncés.

Le dispositif de fixation 100 comprend également au moins un tampon 40 en mousse plastique solidaire d'une face interne de chacune des mâchoires supérieure 31 et inférieure 34. Chaque tampon 40 comporte une surface libre destinée à être collée sur le bord 1 du panneau 10 lorsque les mâchoires 31,34 enserrent ledit bord 1 (figure 1).

Le fait de coller le dispositif de fixation 100 sur le bord 1 du panneau 10 permet de maintenir le panneau 10 sur une structure porteuse dont les rail 20 sont inclinés, sans nécessité d'utiliser une cale mécanique, habituellement réalisée pour éviter le glissement du panneau 10 sur le rail 20.

Avantageusement, un tampon 40 est fixé à la face interne d'une mâchoire 31,34, via un film adhésif 41 acrylique. De même, la surface libre du tampon 40, destinée à être collée sur le bord 1 du panneau 10 comporte avantageusement un film adhésif 41 acrylique. Le tampon 40 présente sensiblement la même longueur (selon l'axe x) que la bride 30 et présente une largeur (selon l'axe y) de l'ordre de 15mm.

La mousse plastique formant les tampons est choisie pour être compressible dans un domaine élastique ; elle pourra en particulier présenter une résistance à la compression comprise entre 100 et 500 kPa, pour un taux de compression de 50%.

Préférentiellement, le tampon 40 est composé d'une mousse alvéolaire à cellules fermées, à base de polyéthylène, de polyuréthane ou d'acrylique. Par « à cellules fermées », on entend une mousse dont les alvéoles ne communiquent pas entre elles. Une mousse alvéolaire à cellules fermées est avantageuse en ce qu'elle présente un bon compromis en terme de compressibilité et de stabilité mécanique dans le temps.

Les propriétés de la mousse plastique du tampon 40 permettent ainsi :
- d'accommoder la variabilité d'épaisseur des panneaux 10,
- d'amortir efficacement certaines contraintes liées à la flexion du panneau sous charge (neige, vent, ...)
- d'éviter une dégradation rapide du tampon 40, due à des éléments externes (tels que le soleil ou les intempéries, évitant notamment la pénétration de l'humidité)
- de limiter, voire d'éviter les déformations plastiques du tampon 40, susceptibles d'affecter la fiabilité de la fixation 100.

Avantageusement, un tampon 40 présente une épaisseur comprise entre 1 et 3mm, en particulier 2mm. Une telle gamme d'épaisseur permet d'accommoder une variation typique d'épaisseur de panneau 10 de l'ordre de 1mm tout en conservant une bonne tenue mécanique en cisaillement ; elle permet également de limiter les contraintes dans le film adhésif.

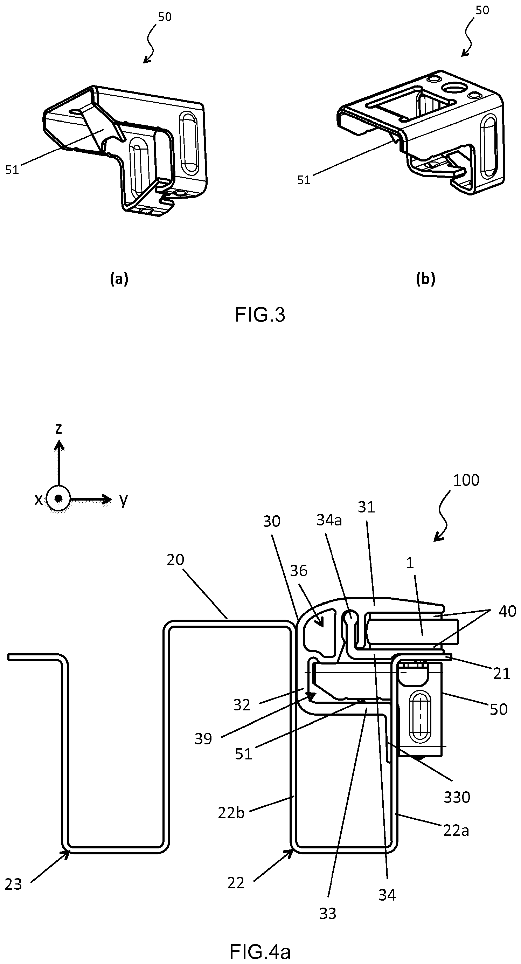

Le dispositif de fixation 100 comprend en outre une agrafe métallique 50 (figures 3a et 3b). Elle sera insérée, selon un axe d'emboitement parallèle à l'axe y, dans un espace d'emboitement 39 de la bride 30, défini par la mâchoire inférieure 34, le fond 32 et la paroi inférieure 33, lors de la fixation du panneau 10 sur le rail 20.

L'agrafe 50 comprend au moins une languette de fixation 51 métallique destinée à entrer en contact avec une face interne 33a de la paroi inférieure 33, lorsque l'agrafe 50 est insérée dans l'espace d'emboitement 39 ; le rôle de la languette de fixation 51 est alors d'assurer le maintien de l'agrafe 50 dans ledit espace d'emboitement 39.

A titre d'exemple, l'agrafe 50 est formée en acier. Elle pourra présenter des dimensions dans les gammes suivantes :
- selon l'axe y : entre 20 et 35 cm ;
- selon l'axe x : entre 15 et 25 cm ;
- selon l'axe z : entre 15 et 25 cm.

La languette de fixation 51 flexible est orientée selon un axe sécant à l'axe principal (axe d'emboitement) de l'agrafe 50. Elle est dite flexible car elle est apte à se déformer, en se rapprochant de l'axe principal, lors de l'insertion de l'agrafe 50 dans l'espace d'emboitement 39, au contact de la face interne 33a de la paroi inférieure 33 : elle n'oppose donc pas de résistance à l'emboîtement de l'agrafe 50 dans l'espace d'emboitement 39.

Elle est également configurée de sorte qu'elle soit rigide et se bloque sur la face interne 33a de la paroi inférieure 33, lorsque l'agrafe 50 est tirée dans le sens de l'extraction de l'espace d'emboîtement 39.

Selon une première variante (non représentée), la languette de fixation 51 coopère avec un épaulement aménagé sur la face interne 33a de la paroi inférieure 33. En d'autres termes, la languette de fixation 51 est capable de se déformer pour passer l'épaulement lors de l'insertion de l'agrafe 50 dans l'espace d'emboitement 39, mais elle viendra se bloquer sur ledit épaulement si l'agrafe 50 est tirée dans le sens de l'extraction de l'espace d'emboitement 39.

Selon une deuxième variante (figure 1), la languette de fixation 51 assure le maintien de l'agrafe 50 dans l'espace d'emboitement 39 par griffure de la face interne 33a de la paroi inférieure 33. Comme décrit précédemment, la languette de fixation 51 est capable de se déformer au contact de la face interne 33a de la paroi inférieure 33 lors de l'insertion de l'agrafe 50 dans l'espace d'emboitement 39, selon l'axe d'emboitement ; la languette 51 ne gêne donc pas l'emboitement de l'agrafe 50. Par contre, ladite languette 51 va venir griffer la face interne 33a de la paroi inférieure 33, si l'agrafe 50 est tirée dans le sens de l'extraction de l'espace d'emboitement 39. Il se forme alors, en bout de griffure, un bourrelet sur la face interne 33a, qui agit comme un épaulement ou une butée et bloque le mouvement de translation, dans le sens de l'extraction de l'agrafe 50. A titre d'exemple, la hauteur du bourrelet est de l'ordre de 0,1mm.

Selon cette deuxième variante, la dureté du matériau constituant l'agrafe 50 est supérieure à celle du matériau constituant la paroi inférieure 33 de la bride 30, de manière à permettre la pénétration et la griffure de la languette 51 dans la paroi inférieure 33. Par exemple, la bride 30, et donc la paroi inférieure 33, pourront être formées en aluminium et l'agrafe 50 en acier.

De manière avantageuse, l'agrafe 50 est formée à partir d'une pièce unique métallique. La languette de fixation 51 est formée par découpe dans une paroi de l'agrafe 50 et par pliage de ladite paroi (figures 3a et 3b).

En position de fixation du panneau 10 sur le rail 20, comme illustré sur la figure 1, l'agrafe 50 est également destinée à être en contact avec un rebord 21 du rail 20 : soit plaquée contre lui, soit en contact par l'intermédiaire d'une autre languette de fixation flexible.

Selon l'invention, il est prévu qu'une face externe de la mâchoire inférieure 34 repose sur le rebord 21 du rail 20 : ledit rebord 21 est ainsi au moins en partie disposé dans l'espace d'emboitement 39 défini entre la mâchoire inférieure 34 et la paroi inférieure 33. Lorsqu'elle est insérée dans l'espace d'emboitement 39, l'agrafe 50 va traverser une ouverture 24 aménagée dans un flan du rail 20 et entrer en contact avec la face interne 33a de la paroi inférieure 33 et avec le rebord 21 du rail 20, maintenant celui-ci plaqué contre la face externe de la mâchoire inférieure 34. Notons que les dimensions de l'ouverture 24 sont prévues de sorte que l'agrafe 50 puisse y être introduite aisément.

L'élasticité de la languette de fixation 51, combinée avec celle des tampons 40, contribue à maintenir une pression de contact positive, selon l'axe z, des mâchoires 31,34 sur les deux faces du panneau 10, et ce en dépit des potentielles déformations plastiques (attendues mais limitées) du matériau des tampons 40 au cours de la durée d'utilisation de l'assemblage, prévue de 20 à 30 ans. Le caractère élastique de la languette de fixation 51 favorise donc l'enserrement du bord 1 du panneau 10 selon l'axe z par les mâchoires 31,34.

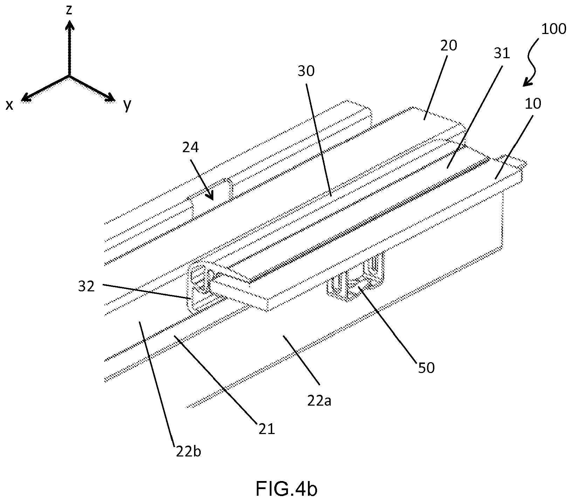

Les figures 4a et 4b présentent un mode de réalisation avantageux d'un assemblage d'un panneau 10 sur un rail 20 de structure porteuse au moyen d'au moins un dispositif de fixation 100 mettant en œuvre une bride 30, des tampons 40 et une agrafe 50 tels qu'illustrés sur les figures 2a et 3a.

Le rail 20 définit au moins une rainure 22 de section en forme de U dans laquelle est positionné le dispositif de fixation 100. Avantageusement, le rail 20 comprend une deuxième rainure 23 pour accueillir le ou les dispositifs de fixation d'un panneau 10 voisin.

Les mâchoires 31,34 de la bride 30 enserrent le bord 1 du panneau 10, et sont respectivement fixées sur l'une et l'autre des faces du panneau 10 par l'intermédiaire des tampons 40. La mâchoire inférieure 34 de la bride 30 est disposée sur le rebord 21 du rail 20. L'espace d'emboitement 39 de la bride 30 est positionné en vis-à-vis d'une ouverture 24 ménagée dans un flan 22a (formant une paroi de la rainure 22 en U) du rail 20.

L'agrafe 50 est insérée dans l'ouverture 24 et dans l'espace d'emboitement 39, de manière à maintenir le rebord 21 du rail 20 plaqué contre la mâchoire inférieure 34. La languette de fixation 51 assure une forte tenue mécanique de l'agrafe 50 dans l'espace d'emboitement 39, par griffure et/ou par blocage via un épaulement, sur la face interne 33a de la paroi inférieure 33.

Le panneau 10 est ainsi solidement maintenu dans chaque dispositif de fixation 100 et sur le rail 20, la languette de fixation 51 de l'agrafe 50 assurant une fonction anti-retour.

Le fond 32 de la bride 30 peut venir en contact avec un flan 22b de la rainure 22, comme illustré sur la figure 4a. Avantageusement, la paroi inférieure 33 de la bride 30 se prolonge en une paroi secondaire 330, orthogonale à la paroi inférieure 33, et apte à prendre appui sur le flan 22a du rail 20. On pourra prévoir que la dimension entre les faces du fond 32 et de la paroi secondaire 330, susceptibles de rentrer en contact avec les flans 22a,22b de la rainure 22, soit sensiblement inférieure à la largeur moyenne de la rainure 22 : ceci afin de laisser une tolérance de montage du dispositif de fixation 100 sur le rail 20.

La présente invention concerne également un procédé d'assemblage d'un panneau 10 sur un rail 20 de structure porteuse au moyen d'au moins un dispositif de fixation 100 tel que décrit précédemment.

Le procédé d'assemblage comprend une étape a) au cours de laquelle on opère l'écartement de la mâchoire inférieure 34 mobile de la bride 30 par rapport à la mâchoire supérieure 31, en vue d'enserrer le bord 1 du panneau 10. Avantageusement, afin de protéger les surfaces libres collables des tampons 40 solidaires des faces internes des deux mâchoires 31,34, un ruban amovible se trouve sur chacune desdites surfaces.

Le procédé d'assemblage comprend également une étape b) au cours de laquelle on opère la fixation par collage de la mâchoire supérieure 31 sur une face du panneau 10, puis de la mâchoire inférieure 34 sur l'autre face, par rapprochement de ladite mâchoire mobile 34. Lorsque les rubans amovibles sont présents, l'étape b) comprend le retrait des rubans, préalablement à l'assemblage des surfaces libres collables des tampons 40 sur les faces du panneau 10.

Typiquement, quatre dispositifs de fixation 100 seront utilisés pour chaque panneau 10. Deux dispositifs 100 seront préférentiellement disposés sur chacun des bords de plus grande dimension du panneau 10, à une distance du coin du panneau 10 de l'ordre de 20% à 1/3 de la grande dimension du panneau 10.

La fixation des dispositifs 100 sur un panneau 10 peut être facilement effectuée sur place, sur le site d'installation des panneaux 10 sur la structure porteuse. Par ailleurs, les brides 30, lorsqu'elles sont solidaires des panneaux 10, peuvent avantageusement servir de poignées de préhension du panneau 10 et faciliter la manipulation de panneaux 10 sans cadre.

Le procédé d'assemblage comprend ensuite une étape c) au cours de laquelle on opère la pose du panneau 10 sur le rail 20 de la structure porteuse, dans sa position pour fixation : la mâchoire inférieure 34 de la bride 30 est en appui sur un rebord 21 du rail 20 et l'espace d'emboitement 39 de la bride 30 est en vis-à-vis d'une ouverture 24 aménagée dans un flan 22a du rail 20.

Avantageusement, pour atteindre la position pour fixation du panneau 10 sur la structure porteuse, l'étape c) comprend la disposition de la bride 30 en partie dans la rainure 22 de section en U du rail 20 et en partie sur le rebord 21 du rail 20 ; puis l'étape c) comprend le glissement de la bride 30 le long du rail, jusqu'à sa position pour fixation. Comme indiqué précédemment, les dimensions de la bride 30 (notamment entre le fond 32 et la paroi secondaire 330) sont choisies de manière à laisser le jeu nécessaire à un glissement aisé de la bride 30 dans la rainure 22 du rail 20. Ce jeu pourra également être mis à profit pour adapter les tolérances d'écart entre les rails 20 ou le fléchissement du panneau 10 sous charge.

Enfin, le procédé d'assemblage comprend une étape d) au cours de laquelle l'insertion de l'agrafe 50 successivement dans l'ouverture 24 et dans l'espace d'emboitement 39 est opérée, de manière à maintenir le rebord 21 du rail 20 plaqué contre la mâchoire inférieure 34 ; la languette de fixation 51 de l'agrafe 50 assure le maintien de l'agrafe 50 dans l'espace d'emboitement 39 et par là même une bonne tenue mécanique du panneau 10 sur le rail 20 de la structure porteuse.

Le dispositif de fixation 100 permet de relâcher la contrainte de précision de positionnement entre la bride 30 solidaire du bord 1 du panneau 10 et la zone de fixation du rail 22 (ici l'ouverture 24 dans le flan 22a). En effet, compte tenu de la dimension longitudinale (selon l'axe x) de la bride 30 qui est au moins deux fois plus grande que l'ouverture 24, une erreur de quelques millimètres sur le positionnement de la bride 30 sur le panneau 10 ou sur le positionnement de l'ouverture 24 sur le rail 20 est largement absorbée et ne pénalise pas la fixation du panneau 10.

De manière avantageuse, la bride 30 comporte entre le fond 32 et les mâchoires 31,34, une partie évidée 36 permettant de réduire la quantité de matière de la bride 30, limitant ainsi la masse et les coûts de celle-ci.

Le dispositif de fixation 100 permet au panneau 10 de conserver des degrés de liberté de mouvement : en pivotement d'une part, comme schématisé par la flèche en arc de cercle sur la figure 1. Ce mouvement permet d'accompagner le fléchissement du panneau 1 et évite de créer un point de concentration de contraintes en bord du panneau 10. La présence des tampons 40 entre la bride 30 et le bord 1 du panneau 10 absorbe également les contraintes mécaniques.

D'autre part, le panneau 10 a un degré de liberté de mouvement en translation, selon l'axe d'emboîtement, essentiellement lié au jeu entre les dimensions (selon l'axe y) de la bride 30 et la largeur de la rainure 22 du rail 20. L'amplitude de ce mouvement de translation est néanmoins limitée.

A titre d'exemple, un panneau 10 en verre trempé de 6mm d'épaisseur, présentant une largeur de 996 mm et une longueur de 1192 mm, maintenu sur des rails par quatre dispositifs de fixation 100 selon le mode de réalisation des figures 4a, 4b, et soumis à des cycles de charge de +2400 Pa et -2400Pa pendant 1h à 3h, a montré une tenue mécanique fiable. Le panneau 10 a subi une déformation (« bow ») sous charge de l'ordre de 50mm, et un déplacement latéral de chacun des bords 1 du panneau lié à cette courbure de l'ordre de 2,5mm qui a pu être autorisé par les dispositifs de fixation 100 sans affecter la solidité, la tenue mécanique ou la fiabilité dans le temps desdits dispositifs.

Bien entendu, l'invention n'est pas limitée aux modes de mise en œuvre décrits et on peut y apporter des variantes de réalisation sans sortir du cadre de l'invention tel que défini par les revendications.

## Revendications

1. Dispositif de fixation (100) pour solidariser un panneau (10) sur un rail (20) de structure porteuse, comprenant :
• Une bride (30) métallique de section en forme de C définissant une mâchoire supérieure (31), un fond (32) et une paroi inférieure (33), et comprenant une mâchoire inférieure (34) mobile, disposée entre la mâchoire supérieure (31) et la paroi inférieure (33) ; les mâchoires (31,34) étant destinées à enserrer un bord (1) du panneau (10) ;
• Au moins un tampon (40) en mousse plastique solidaire d'une face interne de chacune des mâchoires (31,34), et comportant une surface libre collable sur le bord (1) du panneau (10) lorsque les mâchoires (31,34) enserrent ledit bord (1) ;
• Une agrafe (50) métallique comprenant au moins une languette de fixation (51) flexible destinée à entrer en contact avec la paroi inférieure (33) lorsque l'agrafe (50) est insérée dans un espace d'emboitement (39) défini par la mâchoire inférieure (34), le fond (32) et la paroi inférieure (33) de la bride (30), et à assurer le maintien de l'agrafe (50) dans ledit espace d'emboitement (39).

2. Dispositif de fixation (100) selon la revendication précédente, dans lequel le tampon (40) est une mousse alvéolaire à cellules fermées, à base de polyéthylène, de polyuréthane ou d'acrylique.

3. Dispositif de fixation (100) selon la revendication précédente, dans lequel la mousse présente une résistance à la compression comprise entre 100 et 500 kPa, pour un taux de compression de 50%.

4. Dispositif de fixation (100) selon l'une des revendications précédentes, dans lequel un tampon (40) est solidaire de la face interne de chacune des mâchoires (31,34), via un film adhésif acrylique (41).

5. Dispositif de fixation (100) selon l'une des revendications précédentes dans lequel la surface libre collable du tampon (40) comporte un film adhésif acrylique (41).

6. Dispositif de fixation (100) selon l'une des revendications précédentes dans lequel chaque tampon (40) présente une épaisseur comprise entre 1mm et 3mm.

7. Dispositif de fixation (100) selon l'une des revendications précédentes, dans lequel la mâchoire inférieure (34) de la bride (30) est mobile par rapport à la mâchoire supérieure (31) :
• en translation selon un axe longitudinal (x), orthogonal à la section en forme de C de la bride (30),
• et/ou en translation selon un axe (z) normal à un plan (x,y) dans lequel s'étend la mâchoire supérieure (31),
• et/ou en rotation selon l'axe longitudinal (x).

8. Dispositif de fixation (100) selon l'une des revendications précédentes, dans lequel la longueur de la bride (30), selon un axe longitudinal (x), orthogonal à la section en forme de C de la bride (30), est comprise entre 5 cm et 20 cm.

9. Dispositif de fixation (100) selon l'une des revendications précédentes, dans lequel la paroi inférieure (33) de la bride (30) se prolonge en une paroi secondaire (330), orthogonale à la paroi inférieure (33), et apte à prendre appui sur un flan (22a) du rail (20), lorsque la bride (30) est disposée sur un rebord (21) dudit rail (20) pour la fixation du panneau (10).

10. Dispositif de fixation (100) selon l'une des revendications précédentes, dans lequel la bride (30) est formée à partir d'un matériau choisi parmi l'acier ou l'aluminium

11. Dispositif de fixation (100) selon l'une des revendications précédentes, dans lequel l'agrafe (50) est formée en l'acier.

12. Dispositif de fixation (100) selon l'une des revendications précédentes, dans lequel la languette de fixation (51) de l'agrafe (50) est formée par découpe dans une paroi de l'agrafe (50) et par pliage.

13. Dispositif de fixation (100) selon l'une des revendications précédentes, dans lequel la languette de fixation (51) coopère avec un épaulement de la paroi inférieure (33) pour assurer le maintien de l'agrafe (50) dans l'espace d'emboitement (39).

14. Dispositif de fixation (100) selon l'une des revendications précédentes, dans lequel la languette de fixation (51) assure le maintien de l'agrafe (50) dans l'espace d'emboitement (39) par griffure de la paroi inférieure (33), la dureté du matériau constituant l'agrafe (50) étant supérieure à celle du matériau constituant la paroi inférieure (33) de la bride (30).

15. Dispositif de fixation (100) selon l'une des revendications précédentes, dans lequel l'élasticité de la languette de fixation (51) favorise un enserrement du bord (1) du panneau (10) par les mâchoires (31,34).

16. Assemblage d'un panneau (10) sur un rail (20) de structure porteuse au moyen d'au moins un dispositif de fixation (100) selon l'une des revendications précédentes, dans lequel :
• Les mâchoires supérieure (31) et inférieure (34) de la bride (30) enserrent le bord (1) du panneau (10), et sont respectivement fixées sur l'une et l'autre des faces du panneau (10) par l'intermédiaire des tampons (40) ;
• La mâchoire inférieure (34) de la bride (30) est disposée sur un rebord (21) du rail (20) et l'espace d'emboitement (39) de la bride (30) est positionné en vis-à-vis d'une ouverture (24) ménagée dans un flan (22a) du rail (20) ;
• L'agrafe (50) est disposée dans l'ouverture (24) et dans l'espace d'emboitement (39), de manière à maintenir le rebord (21) du rail (20) plaqué contre la mâchoire inférieure (34).

17. Assemblage selon la revendication précédente, dans lequel le panneau (10) constitue un module photovoltaïque bi-verre sans cadre et/ou biface sans cadre.

18. Procédé d'assemblage d'un panneau (10) sur un rail (20) de structure porteuse au moyen d'au moins un dispositif de fixation (100) selon l'une des revendications 1 à 15, comprenant :
a) L'écartement de la mâchoire inférieure (34) mobile de la bride (30) par rapport à la mâchoire supérieure (31),
b) La fixation par collage de la mâchoire supérieure (31) sur une face du panneau (10), puis de la mâchoire inférieure (34) sur l'autre face par rapprochement de ladite mâchoire (34) mobile,
c) La pose du panneau (10) sur la structure porteuse, la mâchoire inférieure (34) de la bride (30) étant en appui sur un rebord (21) du rail (20) de ladite structure et l'espace d'emboitement (39) de la bride (30) étant en vis-à-vis avec une ouverture (24) aménagée dans un flan (22a) du rail (20),
d) L'insertion de l'agrafe (50) successivement dans ladite ouverture (24) et dans l'espace d'emboitement (39), de manière à maintenir le rebord (21) du rail (20) plaqué contre la mâchoire inférieure (34), la languette de fixation (51) de l'agrafe (50) assurant le maintien de ladite agrafe (50) dans l'espace d'emboitement (39).

19. Procédé d'assemblage selon la revendication précédente, dans lequel l'étape b) comprend le retrait de rubans protégeant les surfaces libres collables des tampons (40) de la mâchoire supérieure (31) et de la mâchoire inférieure (31), préalablement à la fixation sur les faces du panneau (10).

20. Procédé d'assemblage selon l'une des deux revendications précédentes, dans lequel l'étape c) comprend la disposition de la bride (30) dans une rainure (22) de section en U du rail (20) et sur le rebord (21) du rail (20), et le glissement de la bride (30) le long du rail (20), jusqu'à sa position pour fixation.

## Patentansprüche

1. Fixierungsvorrichtung (100) zum Befestigen eines Paneels (10) an einer Tragstrukturschiene (20), die Folgendes umfasst:
• einen Metallflansch (30) mit C-förmigem Querschnitt, der eine obere Backe (31), einen Boden (32) und eine untere Wand (33) definiert und eine bewegbare untere Backe (34) umfasst, die zwischen der oberen Backe (31) und der unteren Wand (33) angeordnet ist; wobei die Backen (31, 34) vorgesehen sind, um eine Kante (1) des Paneels (10) einzuklemmen;
• wenigstens ein Polster (40) aus Kunststoffschaum, das an einer Innenseite jeder der Backen (31, 34) befestigt ist und eine freie klebefähige Oberfläche auf der Kante (1) des Paneels (10) beinhaltet, wenn die Backen (31,34) die Kante (1) einklemmen;
• eine Metallklammer (50), die wenigstens einen flexiblen Fixierungslappen (51) umfasst, der vorgesehen ist, um mit der unteren Wand (33) in Kontakt zu kommen, wenn die Klammer (50) in einen Eingriffsraum (39) eingeführt wird, der durch die untere Backe (34), den Boden (32) und die untere Wand (33) des Flansches (30) definiert ist, und um ein Halten der Klammer (50) in dem Eingriffsraum (39) sicherzustellen.

2. Fixierungsvorrichtung (100) nach dem vorhergehenden Anspruch, wobei das Polster (40) ein Schaumstoff mit geschlossenen Zellen auf der Basis von Polyethylen, Polyurethan oder Acryl ist.

3. Fixierungsvorrichtung (100) nach dem vorhergehenden Anspruch, wobei der Schaum eine Druckfestigkeit zwischen 100 und 500 kPa für eine Kompressionsrate von 50 % aufweist.

4. Fixierungsvorrichtung (100) nach einem der vorhergehenden Ansprüche, wobei ein Polster (40) an der Innenseite jeder der Backen (31, 34) über einen Acrylhaftfilm (41) befestigt ist.

5. Fixierungsvorrichtung (100) nach einem der vorhergehenden Ansprüche, wobei die freie klebefähige Oberfläche des Polsters (40) einen Acrylhaftfilm (41) beinhaltet.

6. Fixierungsvorrichtung (100) nach einem der vorhergehenden Ansprüche, wobei jedes Polster (40) eine Dicke zwischen 1 mm und 3 mm aufweist.

7. Fixierungsvorrichtung (100) nach einem der vorhergehenden Ansprüche, wobei die untere Backe (34) des Flansches (30) bezogen auf die obere Backe (31) wie folgt bewegbar ist:
• translatorisch entlang einer Längsachse (x), die orthogonal zu dem C-förmigen Querschnitt des Flansches (30) ist,
• und/oder translatorisch entlang einer Achse (z) senkrecht zu einer Ebene (x, y), in der sich die obere Backe (31) erstreckt,
• und/oder drehend entlang der Längsachse (x).

8. Fixierungsvorrichtung (100) nach einem der vorhergehenden Ansprüche, wobei die Länge des Flansches (30) entlang einer Längsachse (x) orthogonal zu dem C-förmigen Querschnitt des Flansches (30) zwischen 5 cm und 20 cm beträgt.

9. Fixierungsvorrichtung (100) nach einem der vorhergehenden Ansprüche, wobei sich die untere Wand (33) des Flansches (30) in eine zweite Wand (330) ausdehnt, die orthogonal zu der unteren Wand (33) ist, und geeignet ist, um sich auf einen Zuschnitt (22a) der Schiene (20) zu stützen, wenn der Flansch (30) an einem Rand (21) der Schiene (20) zum Fixieren des Paneels (10) angeordnet ist.

10. Fixierungsvorrichtung (100) nach einem der vorhergehenden Ansprüche, wobei der Flansch (30) aus einem Material ausgebildet ist, das aus Stahl oder Aluminium ausgewählt ist.

11. Fixierungsvorrichtung (100) nach einem der vorhergehenden Ansprüche, wobei die Klammer (50) aus Stahl ausgebildet ist.

12. Fixierungsvorrichtung (100) nach einem der vorhergehenden Ansprüche, wobei der Fixierungslappen (51) der Klammer (50) durch Ausschneiden in einer Wand der Klammer (50) und durch Biegen ausgebildet ist.

13. Fixierungsvorrichtung (100) nach einem der vorhergehenden Ansprüche, wobei der Fixierungslappen (51) mit einer Schulter der unteren Wand (33) zum Sicherstellen des Haltens der Klammer (50) in dem Eingriffsraum (39) zusammenwirkt.

14. Fixierungsvorrichtung (100) nach einem der vorhergehenden Ansprüche, wobei der Fixierungslappen (51) das Halten der Klammer (50) in dem Eingriffsraum (39) durch Ergreifen der unteren Wand (33) sicherstellt, wobei die Härte des Materials, das die Klammer (50) darstellt, größer als die des Materials ist, das die untere Wand (33) des Flansches (30) darstellt.

15. Fixierungsvorrichtung (100) nach einem der vorhergehenden Ansprüche, wobei die Elastizität des Fixierungslappens (51) ein Einschließen der Kante (1) des Paneels (10) durch die Backen (31, 34) unterstützt.

16. Montage eines Paneels (10) an einer Tragstrukturschiene (20) mittels wenigstens einer Fixierungsvorrichtung (100) nach einem der vorhergehenden Ansprüche, wobei:
• die obere (31) und die untere (34) Backe des Flansches (30) die Kante (1) des Paneels (10) einschließen und jeweils an der einen und der anderen Seite des Paneels (10) durch Polster (40) fixiert sind;
• die untere Backe (34) des Flansches (30) an einem Rand (21) der Schiene (20) angeordnet ist und der Eingriffsraum (39) des Flansches (30) gegenüber einer Öffnung (24) positioniert ist, die in einem Zuschnitt (22a) der Schiene (20) vorgesehen ist;
• die Klammer (50) in der Öffnung (24) und in dem Eingriffsraum (39) so angeordnet ist, dass der Rand (21) der Schiene (20) an die untere Backe (34) angelegt gehalten wird.

17. Montage nach dem vorhergehenden Anspruch, wobei das Paneel (10) ein rahmenloses zweiglasiges und/oder ein rahmenloses zweiseitiges Photovoltaikmodul darstellt.

18. Verfahren zum Montieren eines Paneels (10) an einer Tragstrukturschiene (20) mittels wenigstens einer Fixierungsvorrichtung (100) nach einem der Ansprüche 1 bis 15, das Folgendes umfasst:
a) Trennen der bewegbaren unteren Backe (34) des Flansches (30) bezogen auf die obere Backe (31),
b) Fixieren durch Kleben der oberen Backe (31) an eine Seite des Paneels (10), anschließend der unteren Backe (34) an die andere Seite durch Annähern der bewegbaren Backe (34),
c) Anbringen des Paneels (10) an der Tragstruktur, wobei die untere Backe (34) des Flansches (30) auf einem Rand (21) der Schiene (20) dieser Struktur gestützt ist und der Eingriffsraum (39) des Flansches (30) gegenüber einer Öffnung (24) ist, die in einem Zuschnitt (22a) der Schiene (20) vorgesehen ist,
d) Einführen der Klammer (50) nacheinander in die Öffnung (24) und in den Eingriffsraum (39), so dass der Rand (21) der Schiene (20) an die untere Backe (34) angelegt gehalten wird, wobei der Fixierungslappen (51) der Klammer (50) das Halten der Klammer (50) in dem Eingriffsraum (39) sicherstellt.

19. Montageverfahren nach dem vorhergehenden Anspruch, wobei der Schritt b) das Entfernen von Bändern umfasst, die die freien klebefähigen Oberflächen der Polster (40) der oberen Backe (31) und der unteren Backe (31) vor dem Fixieren an den Seiten des Paneels (10) schützen.

20. Montageverfahren nach einem der zwei vorhergehenden Ansprüche, wobei der Schritt c) das Anordnen des Flansches (30) in einer Nute (22) mit U-Querschnitt der Schiene (20) und an dem Rand (21) der Schiene (20) und das Gleiten des Flansches (30) längs der Schiene (20) bis zu seiner Position zum Fixieren umfasst.

## Claims

1. Fastening device (100) for securing a panel (10) to a support structure rail (20), comprising:
• a metal flange (30) having a C-shaped section defining an upper jaw (31), a bottom (32), and a lower wall (33), and comprising a movable lower jaw (34) arranged between the upper jaw (31) and the lower wall (33); the jaws (31, 34) being intended to enclose an edge (1) of the panel (10);
• at least one pad (40), made of plastic foam, secured to an internal face of each of the jaws (31, 34) and comprising a free surface which can be bonded to the edge (1) of the panel (10) when the jaws (31, 34) enclose said edge (1);
• a metal clip (50) comprising at least one flexible fastening tab (51) which is intended to come into contact with the lower wall (33) when the clip (50) is inserted into an interlocking space (39) defined by the lower jaw (34), the bottom (32), and the lower wall (33) of the flange (30), and to keep the clip (50) in said interlocking space (39).

2. Fastening device (100) according to the preceding claim, wherein the pad (40) is a closed cell foam based on polyethylene, polyurethane, or acrylic.

3. Fastening device (100) according to the preceding claim, wherein the foam has a compressive strength of between 100 and 500 kPa for a compression rate of 50%.

4. Fastening device (100) according to one of the preceding claims, wherein a pad (40) is secured to the internal face of each of the jaws (31, 34) via an acrylic adhesive film (41).

5. Fastening device (100) according to one of the preceding claims, wherein the bondable free surface of the pad (40) comprises an acrylic adhesive film (41).

6. Fastening device (100) according to one of the preceding claims, wherein each pad (40) has a thickness of between 1 mm and 3 mm.

7. Fastening device (100) according to one of the preceding claims, wherein the lower jaw (34) of the flange (30) is movable with respect to the upper jaw (31):
• in translation along a longitudinal axis (x) orthogonal to the C-shaped section of the flange (30),
• and/or in translation along an axis (z) normal to a plane (x, y) in which the upper jaw (31) extends,
• and/or in rotation along the longitudinal axis (x).

8. Fastening device (100) according to one of the preceding claims, wherein the length of the flange (30) along a longitudinal axis (x) orthogonal to the C-shaped section of the flange (30) is between 5 cm and 20 cm.

9. Fastening device (100) according to one of the preceding claims, wherein the lower wall (33) of the flange (30) extends into a secondary wall (330) which is orthogonal to the lower wall (33) and able to abut a side (22a) of the rail (20) when the flange (30) is arranged on a shoulder (21) of said rail (20) for fastening the panel (10).

10. Fastening device (100) according to one of the preceding claims, wherein the flange (30) is made of a material selected from steel or aluminum.

11. Fastening device (100) according to one of the preceding claims, wherein the clip (50) is made of steel.

12. Fastening device (100) according to one of the preceding claims, wherein the fastening tab (51) of the clip (50) is formed by cutting in a wall of the clip (50) and by bending.

13. Fastening device (100) according to one of the preceding claims, wherein the fastening tab (51) cooperates with a shoulder of the lower wall (33) to keep the clip (50) in the interlocking space (39).

14. Fastening device (100) according to one of the preceding claims, wherein the fastening tab (51) keeps the clip (50) in the interlocking space (39) by scratching the lower wall (33), the hardness of the material constituting the clip (50) being greater than that of the material constituting the lower wall (33) of the flange (30).

15. Fastening device (100) according to one of the preceding claims, wherein the elasticity of the fastening tab (51) promotes enclosure of the edge (1) of the panel (10) by the jaws (31, 34).

16. Mounting of a panel (10) on a support structure rail (20) by means of at least one fastening device (100) according to one of the preceding claims, wherein:
• the upper (31) and lower (34) jaws of the flange (30) enclose the edge (1) of the panel (10), and are respectively fastened to one and the other of the faces of the panel (10) via the pads (40);
• the lower jaw (34) of the flange (30) is arranged on a shoulder (21) of the rail (20) and the interlocking space (39) of the flange (30) is positioned opposite an opening (24) formed in a side (22a) of the rail (20);
• the clip (50) is arranged in the opening (24) and in the interlocking space (39) so as to keep the shoulder (21) of the rail (20) pressed against the lower jaw (34).

17. Mounting according to the preceding claim, wherein the panel (10) constitutes a frameless double-glass photovoltaic module and/or a frameless bi-facial photovoltaic module.

18. Method of mounting a panel (10) on a support structure rail (20) by means of at least one fastening device (100) according to one of claims 1 to 15, comprising:
a) moving the movable lower jaw (34) of the flange (30) away from the upper jaw (31),
b) fastening the upper jaw (31) to one face of the panel (10) by adhesion, then fastening the lower jaw (34) to the other face by adhesion by moving said movable jaw (34) closer,
c) laying the panel (10) on the support structure, the lower jaw (34) of the flange (30) resting on a shoulder (21) of the rail (20) of said structure and the interlocking space (39) of the flange (30) facing an opening (24) arranged in a side (22a) of the rail (20),
d) inserting the clip (50) successively into said opening (24) and into the interlocking space (39) so as to keep the shoulder (21) of the rail (20) pressed against the lower jaw (34), the fastening tab (51) of the clip (50) keeping said clip (50) in the interlocking space (39).

19. Mounting method according to the preceding claim, wherein step b) comprises the removal of tapes protecting the bondable free surfaces of the pads (40) of the upper jaw (31) and of the lower jaw (31) prior to the fastening on the faces of the panel (10).

20. Mounting method according to one of the two preceding claims, wherein step c) comprises placing the flange (30) in a U-section groove (22) of the rail (20) and on the shoulder (21) of the rail (20), and sliding the flange (30) along the rail (20) up to its position for fastening.
